Europäisches Patentamt

European Patent Office

Office européen des brevets

(19)

(11) Numéro de publication: **0 053 585**
**B1**

(12) **FASCICULE DE BREVET EUROPEEN**

(45) Date de publication du fascicule du brevet:
06.02.85

(21) Numéro de dépôt: 81830227.5

(22) Date de dépôt: 16.11.81

(51) Int. Cl.⁴: **B 01 J 19/18,** C 08 F 2/04,
C 08 F 2/18, C 08 F 10/00 //
C08F4/14, C08F210/12

(54) **Réacteur pour la polymérisation d'hydrocarbures en solution ou en suspension.**

(30) Priorité: 03.12.80 IT 2639180

(43) Date de publication de la demande:
09.06.82 Bulletin 82/23

(45) Mention de la délivrance du brevet:
06.02.85 Bulletin 85/6

(84) Etats contractants désignés:
BE CH DE FR GB LI NL

(56) Documents cités:
FR - A - 2 109 435
US - A - 2 577 856
US - A - 2 596 975
US - A - 3 354 136
US - A - 3 965 975

(73) Titulaire: **PRESSINDUSTRIA S.p.A., Via Porta d'Arnolfo
n. 35, I-20046 Biassono Milano (IT)**
Titulaire: **GIPROKAUTCHUK, UL. Ibragimova 15, Moscou
(SU)**

(72) Inventeur: **Mamedov, Ulchar A., Ul. Ibragimova n. 15,
Moscou (SU)**
Inventeur: **Korotkevic, Boris S., Ul. Ibragimova n. 15,
Moscou (SU)**
Inventeur: **Timofeev, Evgenii G., Ul. Ibragimova n. 15,
Moscou (SU)**
Inventeur: **Shmuk, Iouri A., Ul. Ibragimova n. 15, Moscou
(SU)**
Inventeur: **Dobrovinschii Vladimir E., Ul. Ibragimova
n. 15, Moscou (SU)**
Inventeur: **Straneo, Paolo, Via Porta d'Arnolfo n. 35,
Biassono (Milano) (IT)**
Inventeur: **Golla, Giuseppe, Via Porta d'Arnolfo n. 35,
Biassono (Milano) (IT)**
Inventeur: **Chiappetti, Carlo, Via Porta d'Arnolfo n. 35,
Biassono (Milano) (IT)**

(74) Mandataire: **Pinna, Mario, Dr. Mario Pinna Piazza Maria
Adelaide 5, I-20129 Milano (IT)**

ACTORUM AG

## Description

La présente invention concerne un réacteur à chaudière pour la polymérisation d'hydrocarbures en solution ou en suspension, apte à être employé dans les procédés de synthèse de butyl-caoutchouc.

Les procédés de polymérisation d'une serie d'hydrocarbures d'oléfines et en particulier d'iso-oléfines comme par exemple: l'iso-butylène, effectués comme d'habitude dans les limites de températures comprises entre les 233,16 K et 163,16 K en présence de catalyseurs comme, par exemple, le chlorure d'aluminium, demandent des éléments spécifiques pour l'appareillage apte à les efféctuer.

En effet la vitesse élevée de réaction et son effet thermique demandent un mélange intensif de la masse de réaction et un efficace dispostif d'évacuation de la chaleur de réaction; en outre le problème est rendu plus difficile par l'intensive sédimentation du polymère sur tous les surface du polymérisateur en contact avec la masse de réaction.

Parmi les appareillages du type employé jusqu'à maintenant on peut mentionner:

a) L'appareil décrit dans le Brevet USA N. 2 577 856 où est installè de façon coaxiale au corps de la chaudiere prevue avec la chemise de réfroidissement, un cylindre fixe réfroidi, à l'intérieur duquel une pompe axiale est placée;

b) L'appareil polymérisateur décrit dans le Brevet Sovietique N. 1 064 735 où dans le corps de la chaudière, prevue même de chemise de réfroidissement, il y a un racleur pour le nettoyage de tous les surfaces d'échange thermique existantes. L'appareil réalisé selon le Brevet américain N. 2 577 856, tandis qu'il garantit, en principe, un mélange intense de la masse de réaction, présente l'inconvénient de ne pas garantir une efficacité constante de dissipation de la chaleur de réaction pendant le procédé de polymérisation à cause de l'augmentation rapide de la couche du polymère qui se dépose sur toutes les surfaces de l'échange de la chaleur (échange thermique).

L'appareil réalisé conformement au Brevet Soviétique susdit, même s'il ne présente pas l'inconvénient de celui américain, pour la raison que dans cet appareil Soviétique on n'à prevu aucun dispositif pour obtenir un mélange efficace de la masse de réaction, il n'est pas apte à être employé pour des procédés tels que les susindiqués.

Le but de cette invention est la réalisation d'un réacteur à chaudière pour la polymérisation des hydrocarbures, par lequel on élimine tous les défauts qui se presentent soit dans l'appareil américain soit dans l'appareil soviétique.

On rejoint ce résultat d'invention en disposant, de façon coaxiale au corps de la chaudière, un cylindre à section annulaire enveloppé à une chemise, pivotant autour de son axe et adéquatement refroidi; le cylindre est rigidement et de façon coaxiale ennexé à un arbre pivotant, avec à l'interieur deux conduites indépendantes, par deux tuyaux radiaux ayant le but d'introduire et respectivement extraire le fluide transporteur de chaleur qui provient ou entre des ou à travers les deux conduites de cet arbre pivotant.

En outre, on a prevu l'installation dans le susdit cylindre pivotant d'une pluralité de cloisons annulaires fixées transversalement aux parois du cylindre.

On a même prevu des racleurs employés pour nettoyer la surface intérieure du corps de l'appareil et les surfaces extérieures de ce cylindre à section annulaire.

Le réacteur à chaudière pour la polymerisation des hydrocarbures, objet de cette invention, sera ci-dessous décrit d'une façon plus detaillée pour une meilleure interprétation suivant les dessins annexés où:

la fig. 1 représente, selon une section longitudinale, en définitive schématique et simplifiée, le seul groupe comprenant la chaudière et ses organes, qui sont les parts plus caractéristiques de l'invention.

la fig. 2 représente elle même selon une section longitudinale en définitive schématique et simplifiée, le groupe avec la chaudière et les organes auxquels on à fait des variations simplificatives.

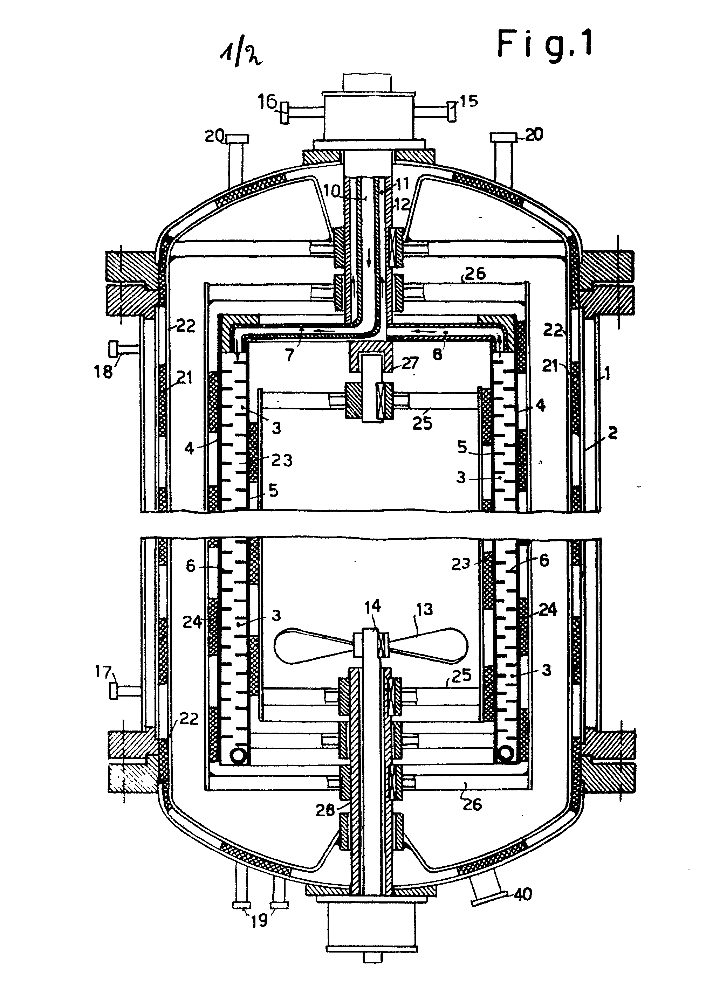

Le réacteur pour la polymérisation d'hydrocarbures objet de la présente invention est representé dans la fig. 1, il comprends un corps cylindrique creux 1, avec fonds demi-sphériques ou elliptiques, prevu avec une chemise 2, à l'intérieur. Dans ce corps et de façon coaxiale on a placé un cylindre à section annulaire 3, qu'on peut faire tourner, il comprend une enveloppe 4 et une chemise 5, qui sont tous les deux munis de cloisons annulaires 6, qui sortent à l'extérieur de l'interstice existant entre l'enveloppe 4 e la susdite chemise 5.

Ce cylindre à section annulaire 3, est rigidement connecté et, par au moins les deux élements tubulaires 7 et 8, il communique avec les conduites 10 et 11 coaxiales, obtenus de l'arbre 12, lequel est actionné par un moteur extérieur qui n'est pas montré dans la fig. 1.

Dans l'espace compris entre ce cylindre annulaire 3 et l'axe longitudinal de l'appareil, il y a un agitateur à pales 13 fixé à l'extrémité d'un arbre 14, actionné par un moteur électrique extérieur, qui n'est pas montré dans la fig. 1.

Le fluide réfrigérant est introduit dans l'interspace obtenu entre l'enveloppe et la chemise du cylindre à section annulaire 3, à travers la goulotte 15, et il sort à travers la goulotte 16, et après le même fluide réfrigérant est introduit dans l'espace compris entre l'enveloppe extérieure et la chemise 2 du corps 1 à travers la goulotte 17 et après il sort de la goulotte 18.

Le liquide qui doit être polymérisé est introduit dans l'espace libre reservé à travers la goulotte 19 et il passe à travers les goulottes 20.

Selon la forme d'exécution préférée de l'appareil polymérisateur, suivant l'invention, à fin de maintenir, d'une façon constante, la surface intérieure 2 du corps 1, on a prevu l'emploi de racleurs 21, qui sont adéquatement fixés à un chassis 22, annexé à l'arbre 12 et pourtant tournant de façon coaxiale autour du même.

A fin de maintenir toujours propre la surface extérieure et celle intérieure du cylindre annulaire 3, on a prevu l'emploi de racleurs 23 et 24 adéquatement annexés aux chassis 25 et 26 supportés par la goulotte cylindrique 27 et l'arbre creux 28, fixé à la structure de l'appareil et que pourtant ils ne tournent pas de façon coaxiale à l'axe longitudinale du même.

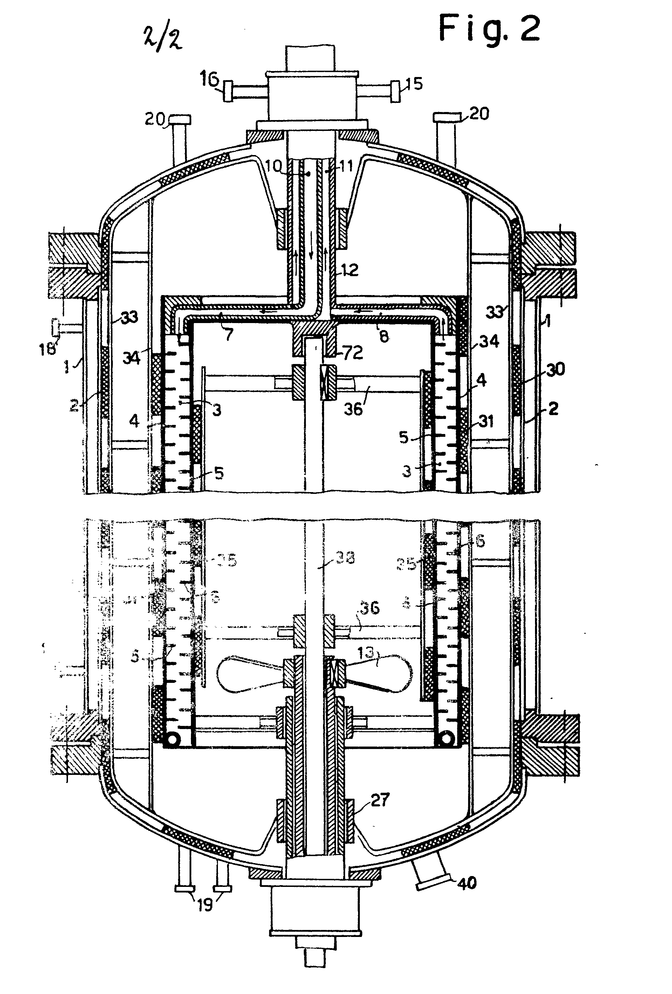

Selon une autre forme avantageuse d'éxecution du dispositif destiné à maintenir toujours propres les surface intérieure 2 du corps 1 et les surfaces ext. et int. du cylindre à section annulaire 3 (lequel dispositif constitue une variation et une simplification en rapport à celui susdit et montré dans la fig. 1) on a prevu l'emploi (fig. 2) de racleurs 30 et 31, qui sont respectivement annexés entre eux et fixés à une structure qui comprend deux chassis 33 et 34, laquelle est supportée à vide par l'arbre 12 et par la goulotte cylindrique 27.

La rotation de cette structure est donnée par l'action de frottement des racleurs 31 sur la surface extérieure du cylindre annulaire 3 pivotant, contrebalancée partiellement par l'action de freinage de racleurs 30 sur la surface intérieure du corps 1.

La surface intérieure du cylindre à section annulaire 3 est constamment maintenue propre par les racleurs 35, placés au chassis fixe 36 annexé à l'arbre 38 qui est annexé à la charpente fixe de l'appareil.

Le fonctionnement de l'appareil à lieu de cette façon: le mélange et le catalyseur qui sont introduits dans l'appareil à travers les goulottes 19, sont mélangés intensivement par l'agitateur à pales 13 qui cause dans l'appareil un régime presque celui du «mélange idéal».

C'est à dire il cause des conditions optimum pour l'evacuation intensive de la chaleur de la zone de contact initial du mélange et du catalyseur et à travers les surfaces d'échange thermique de l'appareil.

La rotation du cylindre 3 permet une meilleure intensification d'échange thermique.

Celà surtout se verifie dans l'espace périphérique entre le corps 1 et le cylindre pivotant 3, où il est necessaire de maintenir le régime hydrodynamique, quand les numéros Tylor sont supérieurs à ceux critiques. En outre dans l'espace périphérique se forment des tourbillons de Tylor qui facilitent le déplacement radial intensif de la masse de réaction et son échange thermique efficient avec la surface extérieure du cylindre 3 et avec la surface du corps 1.

A fin d'éviter la stratification du réfrigérant dans la cavité du cylindre pivotant 3, pendant la phase gazeuse-liquide sous l'effet de la force centrifuge, en cas d'emploi de réfrigerant évaporable (par exemple: éthylène) il vaut mieux employer une pluralité de cloisons annulaires de séparation 6.

Ces cloisons préviennent l'aggravation d'échange thermique de la masse de réaction avec la surface intérieure du cylindre 3, en permettant le mouvement en zig-zag vers le haut du mélange gazeux-liquide du réfrigérant.

Les racleurs qui nettoyent tous les surfaces d'échange thermique de l'appareil, permettent l'augmentation de l'efficacité d'échange thermique, et en outre ils évitent la sédimentation du polymère de ces surfaces.

Pendant la première réalisation de la construction du polymérisateur, les racleurs qui nettoyent la surface du corps 1, roulent sur des chassis 22 à la vitesse angulaire de l'arbre 12, et donc du cylindre 3, tandis que les racleurs placés sur les chassis 25 et 26 sont connectés rigidement à l'arbre creux 28 et nettoyent les surfaces du cylindre pivotant 3.

Dans la variante susmentionnée relative à la réalisation de l'appareil, les chassis 31 et 33 (qui sont liés entre eux) et les racleurs respectif sont rendus pivotants grâce à l'action de ceux qui nettoyent la surface intérieure du cylindre pivotant 3.

En considérant la résistance de frottement qui rencontrent les racleurs nettoyant la surface 2 du corps 1, la vitesse de rotation de ces chassis est sensiblement inférieure à la vitesse de rotation de ce cylindre 3.

Cette variante permet de diminuer la section et la rigidité des chassis 31 et 33, en prevision d'une plus avantageuse distribution des charges sur les mêmes.

A ce but, les chassis 36 et les racleurs 35 qui nettoyent la surface intérieure du cylindre 3, sont connectés à un arbre 38; une éxtrémité de laquelle est supportéé par la goulotte 72 et l'autre est liée (par des moyens pas représentés) à la structure fixe de l'appareil. Le polymère qui se forme dans l'appareil sous-forme de solution ou de suspension vient sans interruptions évacué à travers la goulotte 40.

**Revendications**

1. Réacteur pour la polymérisation d'hydrocarbures en solution ou en suspension comprenant: un corps creux cylindrique (1) chemisé, (en 2) fixé à une structure de support, ce corps de façon coaxiale étant placé un cylindre à section annulaire (3) refroidi qu'on peut faire tourner, avec une enveloppe (4) et une chemise (5) qui forment un interspace annulaire rigidément lié à un arbre (12) pivotant actionné par un moteur et pourvu de deux conduites (10, 11) indépendantes, un agitateur à pales (13) et une pluralité de racleurs pour nettoyer les surfaces d'échange thermiques de l'appareil; le susdit étant caractérisé pour le fait que le cylindre à section annulaire (3) refroidi est lié aux conduites (10, 11) obtenus de l'arbre pivotant par au moins deux tuyaux radiaux (7, 8) qui mettent en communication l'interstice annulaire existant dans le cylindre pivotant avec les conduites (10, 11) obtenus de cet arbre.

2. Réacteur suivant la révendication 1, caractérisé par le fait que les conduites indépendantes (10, 11) obtenus de l'arbre pivotant sont de façon coaxiale.

3. Réacteur suivant la révendication 1, caractérisé par le fait que dans l'interstice obtenu entre l'enveloppe (4) la chemise (5) du cylindre roulant à section annulaire on peut avoir une pluralité de cloisons (6) de séparation.

4. Réacteur suivant la révendication 1, caractérisé par le fait que les chassis (22) sur lesquels sont montés les racleurs (21) pour le nettoyage des surfaces du corps cylindrique fixe de l'appareil, sont liés à l'arbre (12) pivotant et ils roulent de façon coaxiale autour de l'arbre même, tandis que les chassis sur lesquels les racleurs (23, 24) sont montés et qui nettoyent les surfaces extérieure et intérieure du cylindre annulaire (3) pivotant et refroidi, sont fixes.

5. Réacteur suivant la révendication 1, caractérisé par le fait que les racleurs (30, 31) destinés pour le nettoyage de la surface intérieure du corps cylindrique (2) fixe et la surface ext. du cylindre annulaire (5) pivotant refroidi, sont montés sur une charpente (33, 34) supportée à vide le l'arbre (12) de commande du cylindre annulaire et ils sont fixés à un arbre monté de façon coaxiale.

## Patentansprüche

1. Reaktiongefäss, das zur Lösung- bzw. Suspensionspolymerisation von Kohlenwasserstoffen bestimmt ist und schliesst einen (in 2) eingehülsten und an ein Stützgerüst befestigten zylindrischen Hohlkörper ein, mit welchem eine schnittweise ringförmige gekühlte Walze (3) koaxial verbunden ist, die zusammen mit einer Umhüllung (4) und einer Laufbuchse (5) umgedreht werden kann, wobei dieselben einen ringförmigen Zwischenraum bilden, der an eine drehbare motorische Welle (12) steif befestigt ist, welche Welle mit zwei unabhängigen Leitkanälen (10, 11), einem Schaufelrührer (13) und einer Anzahl von zum Reinigen der Wärmetauschflächen des Apparates bestimmten Abkratzgliedern versehen ist; wobei das obenerwähnte Reaktiongefäss dadurch gekennzeichnet ist, dass die schnittweise ringförmige gekühlte Walze (3) mit den in der drehbaren Welle ausgehöhlten unabhängigen Leitkanälen (10, 11) mittels wenigstens zwei radialer Leitkanäle (7, 8) verbunden ist, welche den in der drehbaren Walze vorhandenen Zwischenraum mit den in der erwähnten Welle ausgehölten unabhängigen Leitkanälen (10, 11) in Kommunikation setzen.

2. Reaktiongefäss nach Anspruch 1, dadurch gekennzeichnet, dass die in der drehbaren Welle ausgehöhlten unabhängigen Leitkanäle (10, 11) miteinander koaxial sind.

3. Reaktionsgefäss nach Anspruch 1, dadurch gekennzeichnet, dass in dem zwischen der Umhüllung (4) und der Laufbuchse (5) der drehbaren schnittweise ringförmigen Walze ausgehöhlten Zwischenraum eine Anzahl von Trennrippen (6) angeordnet ist.

4. Reaktiongefäss nach Anspruch 1, dadurch gekennzeichnet, dass die Rahmen (22), worauf die zum Reinigen der Oberflächen des festen zylindrischen Höhlkörpers bestimmten Abkratzglieder (21) montiert sind, an die drehbare Welle (12) befestigt und betreffs derselben koaxial drehbar sind, während die anderen Rahmen, worauf die zum Reinigen der Aussen- und Innenflächen der ringförmigen gekühlten Walze (3) bestimmten Abkratzglieder (23, 24) montiert sind, fest sind.

5. Reaktiongefäss nach Anspruch 1, dadurch gekennzeichnet, dass die zum Reinigen der Innenfläche des festen zylindrischen Hohlkörpers (2) sowie der Aussenfläche der drehbaren gekühlten ringförmigen Walze (3) bestimmten Abkratzglieder (30, 31) auf einem in Freilauf durch die Antriebswelle (12) der ringförmigen Walze abgestützten Rahmenwerk (33, 34) montiert sind, und koaxial betreffs der erwähnten Welle gesichert sind.

## Claims

1) A reaction vessel for the solution or suspension polymerisation of hydrocarbons comprising a cylindrical hollow body that is jacketed (at 2) and fastened to a support structure, said body having a cooled cylinder (3) of annular section coaxially connected thereto, said cylinder (3) being able of rotating together with a housing (4) and a jacket (5) which define an annular space rigidly connected to a rotary, motor driven shaft (12), which shaft is provided with two independently arranged conduits (10, 11); a vane stirrer (13), and a plurality of scraper means for cleaning the heat-exchange surfaces of the apparatus; The above said reaction vessel being characterized in that the cooled, annular-section cylinder (3) is connected to the independent conduits (10, 11) in the rotary shaft via at least two radial tubes (7, 8) which provide communication of said annular space in the rotating cylinder with the conduits (10, 11) in said shaft.

2. The reaction vessel according to claim 1, wherein the independent conduits (10, 11) in the rotary shaft are coaxial to one another.

3. The reaction vessel according to claim 1, wherein a plurality of separation fins (6) are provided in the space arranged between the housing (4) and the jacket (5) of the rotating, annular-section cylinder.

4. The reaction vessel accorcing to claim 1, wherein the frame members (22) on which are mounted the scraper means (21) for keeping clean the surfaces of the fixed cylindrical body of apparatus are connected to the rotary shaft (12) so as to rotate coaxially therewith, while the frame members on which are mounted the scraper means (23, 24) designed to keep clean the external and internal surfaces of the rotating, cooled annular cylinder (3) are fixedly arranged.

5. The reaction vessel according to claims 1, wherein the scraper means (30, 31) that are intended for keeping clean the internal surface of the fixed cylindrical body (2) and the external surface of the rotating, cooled annualr cylinder (3) are mounted on a framework (33, 34) loosely supported on the shaft (12) driving the annular cylinder, and are fastened to said shaft in a coaxial manner.

1/2

Fig.1

2/2       Fig. 2